# EUROPEAN PATENT APPLICATION

(11) **EP 3 446 783 A1**
(43) Date of publication of application: **27.02.2019**
(21) Application number: 18189580.6
(22) Date of filing: 17.08.2018
(51) Int. Cl.: B01L 3/02, B01L 3/00, G01N 35/10

(54) **LIQUID DISCHARGING DEVICE AND LIQUID DISPENSING APPARATUS**

(30) Priority: 22.08.2017 JP 2017159465
(71) Applicant: Toshiba TEC Kabushiki Kaisha, Tokyo 141-8562 (JP)
(72) Inventor: YOKOYAMA, Shuhei, Shinagawa-ku,, Tokyo 141-8562 (JP); KAIHO, Satoshi, Shinagawa-ku,, Tokyo 141-8562 (JP); KUSUNOKI, Ryutaro, Shinagawa-ku,, Tokyo 141-8562 (JP); SHIMIZU, Seiya, Shinagawa-ku,, Tokyo 141-8562 (JP)
(74) Representative: Takeuchi, Maya

(57) **Abstract**

A liquid discharging device to be used with a liquid dispensing apparatus includes an actuator configured to cause a discharge of a liquid according to an electrical signal supplied from the liquid dispensing apparatus, and a first wiring pattern connected to the actuator and configured to electrically connect the actuator to a driving circuit of the liquid dispensing apparatus when the liquid discharging device is mounted on the liquid dispensing apparatus, the first wiring pattern including a disconnection portion configured to introduce an electrical disconnection in the first wiring pattern between the actuator and the driving circuit according to a predetermined supply of electrical power from the driving circuit.

## Description

### FIELD

Embodiments described herein relate generally to a liquid discharging device and a liquid dispensing apparatus.

### BACKGROUND

In a liquid dispensing apparatus, a liquid is dispensed through a liquid discharging device. The liquid discharging device can be detachable from the liquid dispensing apparatus so that it can be discarded after a single use to prevent contamination.

However, there is a problem in existing dispensing systems in that the discharging device might be reused or kept in service even though the discharging device is designed, or at least intended, only for single usage.

### SUMMARY OF INVENTION

To solve the above-cited problems, there is provided a liquid discharging device to be used with a liquid dispensing apparatus, comprising:
an actuator configured to cause a discharge of a liquid according to an electrical signal supplied from the liquid dispensing apparatus; and
a first wiring pattern connected to the actuator and configured to electrically connect the actuator to a driving circuit of the liquid dispensing apparatus when the liquid discharging device is mounted on the liquid dispensing apparatus, the first wiring pattern including a disconnection portion configured to introduce an electrical disconnection in the first wiring pattern between the actuator and the driving circuit according to a predetermined supply of electrical power from the driving circuit.

Preferably the disconnection portion may be a resistor.

Preferably the disconnection portion may be a fuse.

Preferably the liquid discharging device may further comprise:
a second wiring pattern having a first end connecting to a node between the disconnection portion and the actuator and a second end connecting to the driving circuit when the liquid discharging device is mounted on the liquid dispensing apparatus; and
a third wiring pattern having a first end connecting to the driving circuit when the liquid discharging device is mounted on the liquid dispensing apparatus and a second end connecting to the actuator, the actuator being between the first and third wiring patterns.

Preferably the first wiring pattern and the third wiring pattern may be configured to supply a discharge voltage to the actuator from the driving circuit, the discharge voltage causing a discharge of liquid from the liquid dispensing apparatus.

Preferably the first wiring pattern and the second wiring pattern may be configured to supply a disconnection voltage to the disconnection portion from the driving circuit, the disconnection voltage causing the disconnection portion to introduce the electrical disconnection in the first wiring pattern.

Preferably the actuator may be formed of a piezoelectric film.

Preferably the actuator may be formed of a heater.

In another exemplary embodiment, there is also provided a liquid dispensing apparatus, comprising:
a mounting unit on which a liquid discharging device is mounted;
a driving circuit to supply a driving voltage to the liquid discharging device mounted on the mounting unit; and
a controller configured to cause the driving circuit to supply a discharge voltage and a disconnection voltage after a discharge of liquid, wherein
the liquid discharging device includes:
   an actuator configured to cause a discharge of a liquid according to the discharge voltage supplied from the driving circuit; and
   a first wiring pattern connected to the actuator and configured to electrically connect the actuator to the driving circuit, the first wiring pattern including a disconnection portion configured to introduce an electrical disconnection in the first wiring pattern between the actuator and the driving circuit according to the disconnection voltage supplied from the driving circuit.

Preferably the liquid dispensing apparatus may further comprise:
a capacitance measuring circuit configured to measure a capacitance value of the actuator, wherein
the controller may be configured to:
   acquire the capacitance value, and
   cause the driving circuit to supply the discharge voltage to the actuator only if the acquired capacitance value is above a predetermined threshold.

Preferably the liquid discharging device may further comprise:
a second wiring pattern having a first end connecting to a node between the disconnection portion and the actuator and a second end connecting to the driving circuit when the liquid discharging device is mounted on the mounting unit; and
a third wiring pattern having a first end connecting to the driving circuit when the liquid discharging device is mounted on the mounting unit and a second end connecting to the actuator, the actuator being between the first and third wiring patterns.

Preferably the first wiring pattern and the third wiring pattern may be configured to supply the discharge voltage to the actuator from the driving circuit.

Preferably the first wiring pattern and the second wiring pattern may be configured to supply the disconnection voltage to the disconnection portion from the driving circuit.

Preferably the capacitance measuring circuit may connect to the first wiring pattern and the third wiring pattern to measure the capacitance value of the actuator.

Preferably the disconnection portion may be a resistor.

Preferably the disconnection portion may be a fuse.

Preferably the actuator may be formed of a piezoelectric film.

In yet another exemplary embodiment, there is also provided a method of controlling a discharge of a liquid from a liquid dispensing apparatus, comprising:
determining a liquid discharging device is mounted on a liquid dispensing apparatus;
acquiring a capacitance value of an actuator of the liquid discharging device mounted on the liquid dispensing apparatus;
receiving a discharge signal through an interface;
supplying a first control signal to a driving circuit of the liquid dispensing apparatus to drive the actuator of the liquid dispensing device to discharge a liquid if the acquired capacitance value is above a predetermined threshold; and
supplying a second control signal to introduce an electrical disconnection in a first wiring connecting the driving circuit to the actuator after supply of the first control signal, wherein
the first wiring includes a disconnection portion configured to introduce an electrical disconnection between the actuator and the driving circuit when the second control signal is supplied.

Preferably the method may further comprise:
supplying a disconnection voltage to the disconnection portion of the first wiring from the driving circuit to introduce the electrical disconnection in the first wiring in response to the second control signal.

Preferably the method may further comprise:
transmitting a signal indicating the liquid dispensing apparatus has been used through the interface if the acquired capacitance value is below the predetermined threshold.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic perspective view of a discharging system according to a first embodiment.
FIG. 2 is a top view of a liquid discharging device according to the first embodiment.
FIG. 3 is a bottom view of the liquid discharging device according to the first embodiment.
FIG. 4 is a cross-sectional view taken along a line F4-F4 of FIG. 2.
FIG. 5 is a cross-sectional view taken along a line F5-F5 of FIG. 4.
FIG. 6 is a block diagram of a control system of a discharging system according to the first embodiment.
FIG. 7 is a diagram of a connection example of a driving circuit according to the first embodiment.
FIG. 8 is a diagram of a connection example of a driving circuit according to the first embodiment.
FIG. 9 is a diagram of a connection example of a driving circuit according to the first embodiment.
FIG. 10 is a flowchart showing an operation example of a liquid dispensing apparatus according to the first embodiment.
FIG. 11 is a cross-sectional view taken along a line F10-F10 of FIG. 4 according to a second embodiment.
FIG. 12 is a diagram of a connection example of a driving circuit according to the second embodiment.
FIG. 13 is a diagram of a connection example of a driving circuit according to the second embodiment.
FIG. 14 is a diagram of a connection example of a driving circuit according to the second embodiment.

### DETAILED DESCRIPTION

In general, according to one embodiment, a liquid discharging device to be used with a liquid dispensing apparatus includes an actuator configured to cause a discharge of a liquid according to an electrical signal supplied from the liquid dispensing apparatus, and a first wiring pattern connected to the actuator and configured to electrically connect the actuator to a driving circuit of the liquid dispensing apparatus when the liquid discharging device is mounted on the liquid dispensing apparatus, the first wiring pattern including a disconnection portion configured to introduce an electrical disconnection in the first wiring pattern between the actuator and the driving circuit according to a predetermined supply of electrical power from the driving circuit.

Hereinafter, liquid dispensing apparatuses and liquid discharging devices according to certain example embodiments will be described with reference to the drawings. It should be noted, that the particular embodiments explained below are some possible examples of liquid dispensing apparatuses and liquid discharging devices according to the present disclosure and do not limit the possible configurations, specifications, or the like of liquid dispensing apparatuses and liquid discharging devices according to the present disclosure. The drawings are schematic and are in some instances drawn with exaggeration and omissions for purposes of explanatory convenience. In general, components are not drawn to scale. The number of components, the dimensional ratio between different components, or the like does not necessarily match between different drawings or to actual devices.

### First Embodiment

A discharging system according to a first embodiment discharges a liquid using a piezo jet method. For example, the discharging system discharges several picoliters (pL) to several microliters (µL) of a liquid into a microplate, a multi-well plate, or the like according to a user operation. For example, the discharging system is used in a laboratory in a technical field such as biology, chemistry, or pharmacy research.

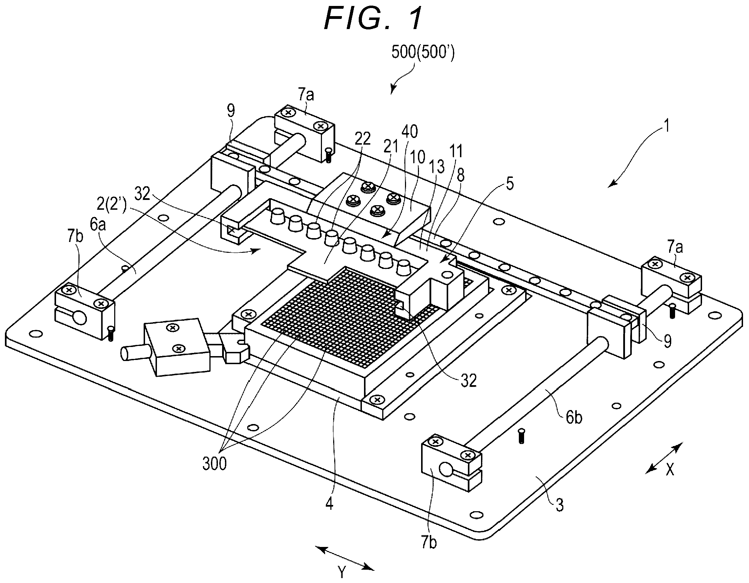

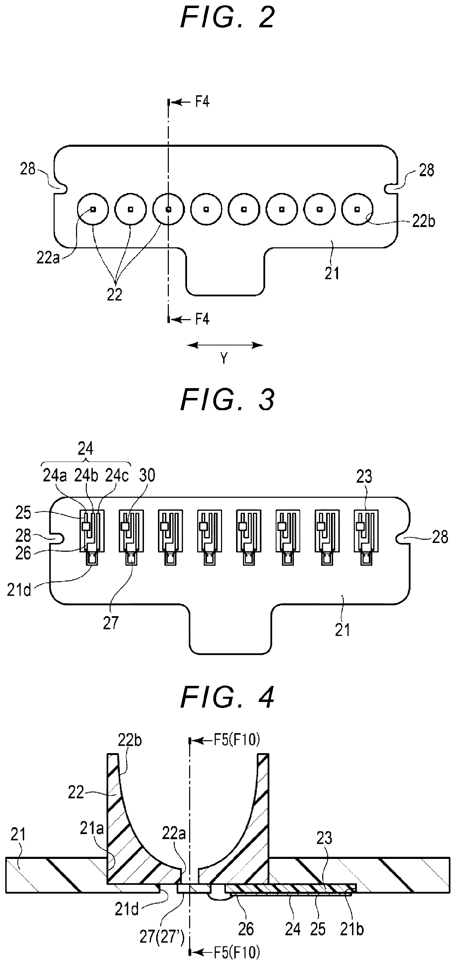

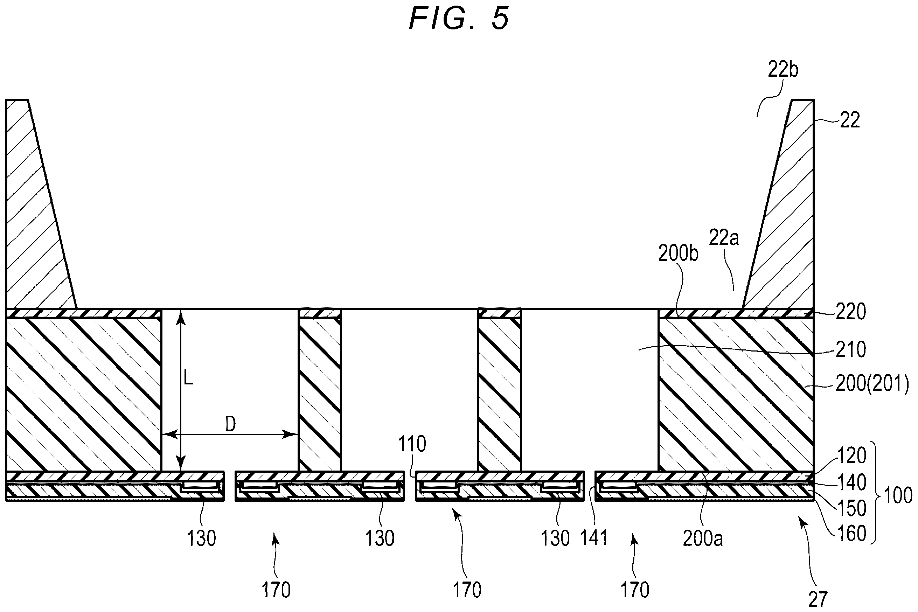

A configuration example of the discharging system according to the first embodiment will be described with reference to FIGS. 1 to 5. FIG. 1 is a schematic perspective view of the discharging system 500. FIG. 2 is a top view of a chemical liquid discharging device 2. FIG. 3 is a bottom view of a surface of the chemical liquid discharging device 2 from which a liquid is discharged. FIG. 4 is a cross-sectional view taken along a line F4-F4 in FIG. 2. FIG. 5 is a cross-sectional view taken along a line F5-F5 in FIG. 4.

As shown in FIG. 1, the discharging system 500 includes a chemical liquid dispensing apparatus 1, the chemical liquid discharging device 2, a host computer 18, and the like. The discharging system 500 may have more elements in addition to the elements depicted in FIG. 1, or some of the elements depicted in FIG.1 may be omitted in some embodiments.

The chemical liquid dispensing apparatus 1 controls the chemical liquid discharging device 2 to dispense a liquid from the chemical liquid discharging device 2.

The chemical liquid dispensing apparatus 1 includes a base 3 of a rectangular flat plate shape, and a mounting module 5 (also referred to as a mounting unit) that mounts the chemical liquid discharging device 2. In the first embodiment, it is assumed that the chemical liquid dispensing apparatus 1 dispenses the liquid into a microplate 4 having 1536 wells. Here, the front to rear direction of the base 3 is referred to as an X direction, and the right to left direction of the base 3 is referred to as a Y direction. The X direction and the Y direction are orthogonal.

The microplate 4 is fixed to the base 3. The microplate 4 includes a plurality of wells 300. Each well 300 of the microplate 4 holds a predetermined volume of a liquid. For example, the liquids in the microplate can be chemicals, reagents, solutions, solvents, or the like and/or may include cells, blood cells, bacteria, plasma, antibodies, DNA, nucleic acids or proteins.

The chemical liquid dispensing apparatus 1 includes a pair of right and left X direction guide rails 6a and 6b extending in the X direction on both sides of the microplate 4 on the base 3. Both ends each of the X direction guide rails 6a and 6b are fixed to fixing bases 7a and 7b protruding on the base 3.

A Y direction guide rail 8 extending in the Y direction is installed between the X direction guide rails 6a and 6b. Both ends of the Y direction guide rail 8 are fixed to an X direction moving base 9 that is slidable in the X direction along the X direction guide rails 6a and 6b, respectively.

The Y direction guide rail 8 includes a Y direction moving base 10 that allows a mounting module 5 to move in the Y direction along the Y direction guide rail 8. The mounting module 5 is mounted on the Y direction moving base 10. The chemical liquid discharging device 2 is fixed to the mounting module 5.

The chemical liquid discharging device 2 is supported so as to be movable to an arbitrary position in the XY directions orthogonal to each other by a combination of an operation of a movement in the Y direction moving base 10 along the Y direction guide rail 8 in the Y direction and an operation of a movement in the X direction moving base 9 along the X direction guide rails 6a and 6b in the X direction.

In the mounting module 5, a slit 32 for fixing the chemical liquid discharging device 2 is formed. When the chemical liquid discharging device 2 is inserted into the slit 32 from a front surface opening portion side of the slit 32, the chemical liquid discharging device 2 is fixed to the chemical liquid dispensing apparatus 1.

The mounting module 5 includes a driving circuit 11 and a capacitance measuring circuit 40. The driving circuit 11 and the capacitance measuring circuit 40 are described below.

The chemical liquid discharging device 2 discharges the liquid based on a control of the chemical liquid dispensing apparatus 1.

The chemical liquid discharging device 2 includes a base member 21 of a flat planar shape that is a plate of a rectangular plate shape. As shown in FIG. 2, a plurality of chemical liquid holding containers 22 is arranged in a row in the Y direction, on a surface side of the base member 21. In the first embodiment, eight chemical liquid holding containers 22 are included. However, the number is not limited to eight. As shown in FIG. 4, the chemical liquid holding container 22 is a container of a cylindrical shape having a bottom, of which a top surface is opened. A chemical liquid holding container recessed portion 21a of a cylindrical shape is formed at a position corresponding to each chemical liquid holding container 22, on the surface side of the base member 21.

The bottom portion of the chemical liquid holding container 22 is adhered and fixed to the recessed portion 21a. A bottom surface opening portion 22a serving as a liquid outlet port is formed at the center position on the bottom portion of the chemical liquid holding container 22. The opening area of a top surface opening portion 22b is larger than the opening area of the bottom surface opening portion 22a of the liquid outlet port.

At both ends of the base member 21, mount fixing notches 28 (also referred to as engaging portions) for mounting and fixing the mounting module 5 are formed respectively. The mount fixing notch 28 is engaged with the mounting module 5. Two notches 28 of the base member 21 are formed in a notch shape of a semi-length cylindrical shape. The mount fixing notch 28 may be a notch shape of a semi-circular shape, a semi-elliptical shape, a triangular shape, or the like. In the first embodiment, the shapes of the two notches 28 are different from each other. Therefore, the left and right shapes of the base member 21 are different, and it is easy to identify the posture of the base member 21.

As shown in FIG. 3, the same number of electrical substrate 23 as the chemical liquid holding container 22 are arranged in row in the Y direction, on a rear surface side of the base member 21. The electrical substrate 23 is a flat plate member of a rectangular shape. As shown in FIG. 4, an electrical substrate recessed portion 21b of a rectangular shape for mounting the electrical substrate 23 and a chemical liquid discharge array portion opening 21d connected with the electrical substrate recessed portion 21b are formed, on the rear surface side of the base member 21. A base end portion of the electrical substrate recessed portion 21b extends to the vicinity of an upper end portion of the base member 21 in FIG. 3 (the position in the vicinity of the right end portion in FIG. 4). As shown in FIG. 4, a distal end portion of the electrical substrate recessed portion 21b extends to a position overlapping a portion of the chemical liquid holding container 22. The electrical substrate 23 is adhered and fixed to the electrical substrate recessed portion 21b.

An electrical substrate wiring 24 is patterned and formed on a surface opposite to an adhesive fixing surface of the electrical substrate recessed portion 21b, on the electrical substrate 23.

The electrical substrate wiring 24 includes wiring patterns 24a to 24c.

The wiring pattern 24a electrically connects the driving circuit 11 and the driving element 130 with each other. That is, one end of the wiring pattern 24a is connected to a control signal input terminal 25 for inputting an electrical signal (also referred to as a driving signal) from the driving circuit 11. The other end of the wiring pattern 24a is connected to the electrode terminal connection portion 26 and connected to one end of the driving element 130.

The wiring pattern 24a has a disconnection portion 30 in the middle. The disconnection portion 30 is formed as a part of the wiring pattern 24a. That is, the driving circuit 11 and the driving element 130 are electrically connected to each other via the disconnection portion 30.

The disconnection portion 30 is an electrically conductive component that can be switched to electrically non-conductive. When in a connected state, the disconnection portion 30 electrically connects the driving circuit 11 and the driving element 130 to each other as a part of the wiring pattern 24a.

The connection state of the disconnection portion 30 can be changed according to the operation of the chemical liquid dispensing apparatus 1. That is, the disconnection portion 30 can be operated to cause a disconnect in the wiring pattern 24a between the driving circuit 11 and the driving element 130. For example, the disconnection portion 30 can be disconnected (switched to a non-conductive state) by electric power supplied from the driving circuit 11.

The disconnection portion 30 may be a resistor or the like having a predetermined resistance value. The disconnection portion 30 may be a fuse or the like.

The wiring pattern 24b electrically connects the driving circuit 11 and the disconnection portion 30 to each other. That is, one end of the wiring pattern 24b is connected to the control signal input terminal 25. The other end of the wiring pattern 24b is connected between the disconnection portion 30 and the driving element 130.

The wiring pattern 24c electrically connects the driving circuit 11 and the driving element 130 to each other. That is, one end of the wiring pattern 24c is connected to the control signal input terminal 25. The other end of the wiring pattern 24c is connected to the electrode terminal connection portion 26 and connected to the other end of the driving element 130.

The base member 21 includes the chemical liquid discharge array portion opening 21d. As shown in FIG. 3, the chemical liquid discharge array portion opening 21d is formed at a position overlapping with the chemical liquid holding container recessed portion 21a on the rear surface side of the base member 21, in an opening portion of a rectangular shape.

A chemical liquid discharge array 27 is adhered and fixed to the bottom surface of the chemical liquid holding container 22 in a state where the chemical liquid discharge array 27 covers bottom surface opening portion 22a of the chemical liquid holding container 22. The chemical liquid discharge array 27 is disposed at a position corresponding to the chemical liquid discharge array portion opening 21d of the base member 21.

As shown in FIG. 5, the chemical liquid discharge array 27 is formed by laminating a nozzle plate 100 and a pressure chamber structure 200. The nozzle plate 100 includes a nozzle 110 that discharges the liquid, a diaphragm 120, the driving element 130 that is a driving unit, an insulation film 140 that insulates the driving element 130, a protection film 150 that is protection layer, a liquid repellant film 160. An actuator 170 includes the diaphragm 120 and the driving element 130. For example, a plurality of nozzles 110 is arranged in 3×3 rows. The plurality of nozzles 110 is positioned inside the bottom surface opening portion 22a of the chemical liquid outlet port of the chemical liquid holding container 22. The chemical liquid holding container 22, the pressure chamber structure 200, the actuator 170, and the like form a discharging portion that discharges the liquid.

For example, the diaphragm 120 is integrated with the pressure chamber structure 200. When a heat treatment is performed on a silicon wafer 201 in an oxygen atmosphere, a SiO₂ (silicon oxide) film is formed on the surface of the silicon wafer 201. The diaphragm 120 uses the SiO₂ film on the surface of the silicon wafer 201. The diaphragm 120 may also be formed by depositing the SiO₂ film on the surface of the silicon wafer 201 by a CVD (Chemical Vapor Deposition) method.

The film thickness of the diaphragm 120 is preferably in a range of 1 to 30 µm. The diaphragm 120 may use a semiconductor material such as SiN (silicon nitride), Al₂O₃ (aluminum oxide), or the like, instead of the SiO₂ film.

The driving element 130 is formed in each nozzle 110. The driving element 130 is an annular shape surrounding the nozzle 110. The shape of the driving element 130 is not limited, and may be, for example, a C shape in which a portion of the circular ring is cut out.

The driving element 130 is electrically connected to the electrode terminal connection portion 26. That is, one surface of the driving element 130 is electrically connected to the wiring pattern 24a. The other surface of the driving element 130 is electrically connected to the wiring pattern 24c.

The driving element 130 is supplied with a voltage by a difference between the voltage applied to the wiring pattern 24a and the voltage applied to the wiring pattern 24c. The driving element 130 is driven with a voltage of a difference therebewteen.

The driving element 130 includes a piezoelectric film that is a piezoelectric material, and uses PZT (Pb (Zr, Ti) O₃: lead zirconate titanate). For example, a piezoelectric film included in the driving element 130 may use a piezoelectric material such as PTO (PbTiO₃: lead titanate), PMNT (Pb (Mg_{1/3}Nb_{2/3})O₃-PbTiO₃), PZNT (Pb (Zn_{1/3}Nb_{2/3})O₃-PbTiO₃), KNN (a compound of KNbO₃ and NaNbO₃), ZnO, and AlN.

The piezoelectric film included in the driving element 130 generates a polarization in the thickness direction. When an electric field in the same direction as the polarization is applied to the driving element 130, the driving element 130 extends or contracts in a direction orthogonal to the electric field direction. That is, the driving element 130 contracts or extends in a direction orthogonal to the film direction.

The nozzle plate 100 includes the protection film 150. The protection film 150 includes a chemical liquid passage portion 141 of a cylindrical shape that is connected to the nozzle 110 of the diaphragm 120.

The nozzle plate 100 includes the liquid repellant film 160 that covers the protection film 150. For example, the liquid repellant film 160 is formed by spin-coating, for example, a silicone resin having a characteristic of repelling a liquid. The liquid repellant film 160 may also be formed by a fluorinated resin material or the like.

The pressure chamber structure 200 includes a warp reduction film 220 that is a warp reduction layer on a surface opposite to the diaphragm 120. The pressure chamber structure 200 includes a pressure chamber 210 that penetrates the warp reduction film 220, is positioned at the position of the diaphragm 120, and is connected to the nozzle 110. For example, the pressure chamber 210 is formed in a circular shape positioned in the same axis as the nozzle 110.

The pressure chamber 210 includes an opening portion connected to the bottom surface opening portion 22a of the chemical liquid holding container 22. It is preferable that the size L in the depth direction of the opening portion of the pressure chamber 210 is larger than the size D in the width direction of the opening portion of the pressure chamber 210. The size L in the depth direction is set to be larger than the size D in the width direction. Therefore, the pressure applied to the liquid in the pressure chamber 210 may delay an escape to the chemical liquid holding container 22 by a vibration of the diaphragm 120 of the nozzle plate 100.

In the pressure chamber structure 200, the side on which the diaphragm 120 of the pressure chamber 210 is disposed is referred to a first surface 200a and the side on which the warp reduction film 220 is disposed is referred to a second surface 200b. The chemical liquid holding container 22 is adhered to the side of the warp reduction film 220 of the pressure chamber structure 200 by, for example, an epoxy type adhesive. The pressure chamber 210 of the pressure chamber structure 200 is connected to the bottom surface opening portion 22a of the chemical liquid holding container 22 by an opening portion of the side of the warp reduction film 220.

The diaphragm 120 deforms in the thickness direction by an operation of the driving element 130 of a surface shape. The chemical liquid discharging device 2 discharges the liquid supplied to the nozzle 110 by a pressure change generated in the pressure chamber 210 of the pressure chamber structure 200 due to the deformation of the diaphragm 120.

The driving circuit 11 drives the chemical liquid discharging device 2 based on a signal from a processor 15 (also referred to as a controller) described below. The driving circuit 11 applies a voltage to the wiring patterns 24a to 24c connected to the driving element 130 of the chemical liquid discharging device 2. For example, the driving circuit 11 supplies a signal, electric power, or the like to the chemical liquid discharging device 2 to discharge the liquid from the chemical liquid discharging device 2. The driving circuit 11 also supplies the chemical liquid discharging device 2 with electric power for disconnecting the disconnection portion 30. That is, the electric power from the driving circuit 11 may cause the disconnection portion 30 to become non-conductive (disconnected).

The driving circuit 11 connects the wiring patterns 24a and 24c, and the capacitance measuring circuit 40 based on a signal from the processor 15. That is, the driving circuit 11 connects the driving element 130 and the capacitance measuring circuit 40 so that the capacitance measuring circuit 40 can measure the capacitance of the driving element 130.

The capacitance measuring circuit 40 measures the capacitance of the connected configuration. The capacitance measuring circuit 40 is connected to the actuator 170 (that includes the driving element 130) of the chemical liquid discharging device 2 through the driving circuit 11. The capacitance measuring circuit 40 measures the capacitance of the driving element 130, that is, the capacitance of a circuit in which the driving element 130 and the disconnection portion 30 are connected to each other.

The capacitance measuring circuit 40 transmits the measured capacitance to the processor 15.

For example, the capacitance measuring circuit 40 measures the capacitance by measuring the impedance of the connected configuration. The capacitance measuring circuit 40 may transmit the measured impedance to the processor 15. The method of measuring the capacitance by the capacitance measuring circuit 40 is not limited to a specific method.

Next, a control system of the discharging system 500 will be described.

As described above, the discharging system 500 includes the chemical liquid dispensing apparatus 1, the chemical liquid discharging device 2, the host computer 18, and the like.

The host computer 18 controls the chemical liquid dispensing apparatus 1 according to operations of an operator. The host computer 18 includes an operation unit 18a, a display unit 18b, and the like. The host computer 18 includes a processor, a RAM, a ROM, a non-volatile memory (NVM), and the like.

The operation unit 18a receives an input of the operation of the operator. For example, the operation unit 18a is a keyboard, a mouse, a touch panel, or the like.

The display unit 18b displays various kinds of information by a control of the processor 15. For example, the display unit 18b includes a liquid crystal display. If the operation unit 18a includes a touch panel or the like, the display unit 18b may be integrated with the operation unit 18a.

The host computer 18 receives various inputs through the operation unit 18a. For example, the host computer 18 receives an input indicating that the chemical liquid holding container 22 has been filled with the liquid. The host computer 18 receives an input selection for discharging the liquid from the chemical liquid holding container 22.

When the host computer 18 receives the input selection for discharging the liquid from the chemical liquid holding container 22, the host computer 18 transmits a discharge signal to the chemical liquid dispensing apparatus 1.

The host computer 18 may receive inputs for each chemical liquid holding container 22. For example, the host computer 18 may receive an input indicating that the filling has been completed and discharging has been instructed separately for each chemical liquid holding container 22.

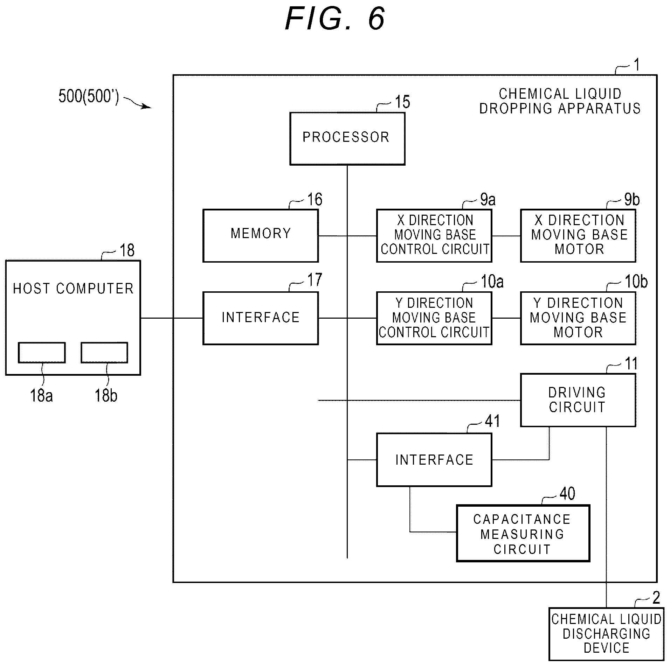

As shown in FIG. 6, the chemical liquid dispensing apparatus 1 includes an X direction moving base control circuit 9a, an X direction moving base motor 9b, a Y direction moving base control circuit 10a, a Y direction moving base motor 10b, the driving circuit 11, the processor 15, a memory 16, an interface 17, the capacitance measuring circuit 40, the interface 41, and the like. Such units are connected to each other through a data bus. The chemical liquid dispensing apparatus 1 may have more elements in addition to the elements depicted in FIG. 6, or some of the elements depicted in FIG. 6 may be omitted in some embodiments.

The processor 15 has a function of controlling all operations of the chemical liquid dispensing apparatus 1. The processor 15 may include an internal cache, various interfaces, and the like. The processor 15 realizes various processes by executing a program stored in advance in the internal cache, the memory 16, or the like.

Some of the various functions realized by the execution of the program by the processor 15 may be realized by a hardware circuit. In this case, the processor 15 controls a function executed by the hardware circuit.

The memory 16 stores various data. For example, the memory 16 stores a control program, a control data, and the like. The control program and the control data are incorporated in advance according to a specification of the chemical liquid dispensing apparatus 1. The control program is a program or the like supporting the function realized by the chemical liquid dispensing apparatus 1.

The memory 16 temporarily stores data or the like under processing of the processor 15. The memory 16 may store data necessary for executing an application program, an execution result of the application program, and the like.

The interface 17 is an interface for transmitting and receiving data to and from the host computer 18. For example, the interface 17 is connected to the host computer 18 through a wired or wireless line. For example, the interface 17 may support a LAN connection, a USB connection, or a Bluetooth® connection.

The X direction moving base control circuit 9a drives the X direction moving base motor 9b based on a signal from the processor 15. The X direction moving base control circuit 9a drives the X direction moving base motor 9b by supplying a signal or electric power to the X direction moving base motor 9b.

The X direction moving base motor 9b moves the X direction moving base 9 in the X direction. For example, the X direction moving base motor 9b is connected to the X direction moving base 9 through a gear or the like and moves the X direction moving base 9 in the X direction.

The Y direction moving base control circuit 10a drives the Y direction moving base motor 10b based on a signal from the processor 15. The Y direction moving base control circuit 10a drives the Y direction moving base motor 10b by supplying a signal or electric power to the Y direction moving base motor 10b.

The Y direction moving base motor 10b moves the Y direction moving base 10 in the Y direction. For example, the Y direction moving base motor 10b is connected to the Y direction moving base 10 through a gear or the like and moves the Y direction moving base 10 in the Y direction.

The interface 41 is an interface for connecting the capacitance measuring circuit 40 and the driving circuit 11. For example, the interface 41 is a connection terminal or the like. Note that, the interface 41 may further connect the capacitance measuring circuit 40 and the processor 15.

The chemical liquid discharging device 2, the driving circuit 11, and the capacitance measuring circuit 40 are as described above.

Next, the function realized by the processor 15 of the chemical liquid dispensing apparatus 1 will be described. The following function is realized by the processor 15 executing the program stored in the memory 16 or the like.

First, the processor 15 has a function of acquiring the capacitance of the actuator 170 of the chemical liquid discharging device 2.

The processor 15 determines whether the chemical liquid discharging device 2 has been set in the mounting module 5. For example, the processor 15 determines whether the chemical liquid discharging device 2 has been set in the mounting module 5 according to a signal from a sensor (not specifically depicted).

Once it has been determined that the chemical liquid discharging device 2 has been set in the mounting module 5, the processor 15 causes the capacitance measuring circuit 40 to measure the capacitance of the actuator 170. That is, the processor 15 causes the capacitance of the driving element 130 to be measured as the capacitance of the actuator 170. The capacitance of the driving element 130 is a capacitance generated between the wiring pattern 24a and the wiring pattern 24c.

For example, the processor 15 transmits a signal to the driving circuit 11 to connect the driving element 130 and the capacitance measuring circuit 40. The processor 15 acquires the capacitance measured by the capacitance measuring circuit 40.

The processor 15 acquires the capacitance of each actuator 170 (that is the capacitance of each driving element 130) corresponding to each of the chemical liquid holding containers 22.

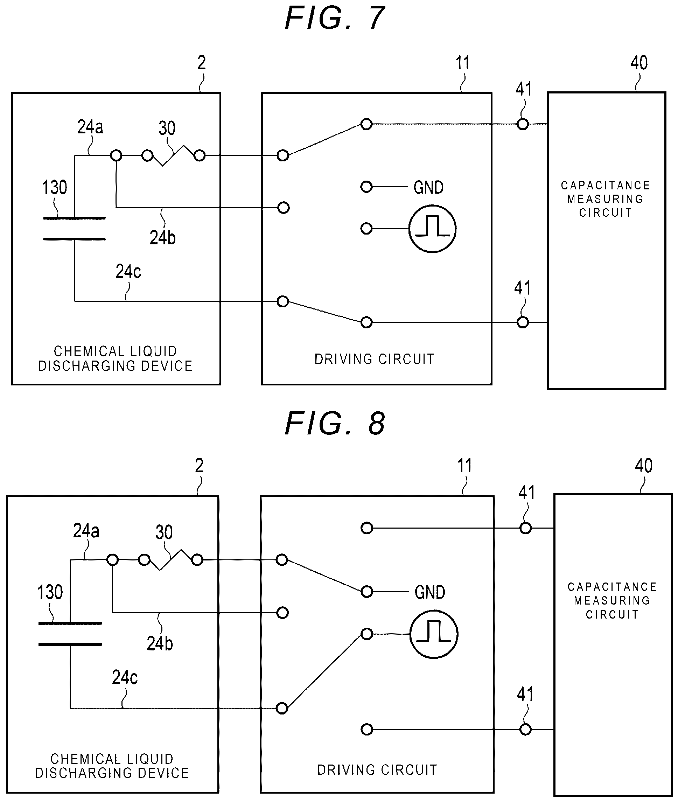

FIG. 7 is a diagram of an example of the connection relationship when the capacitance measuring circuit 40 measures the capacitance of the driving element 130.

As shown in FIG. 7, the capacitance measuring circuit 40 is connected to the driving element 130 through the interface 41 and the driving circuit 11. The capacitance measuring circuit 40 is electrically connected to the wiring patterns 24a and 24c. The capacitance measuring circuit 40 measures the capacitance of the driving element 130 between the wiring pattern 24a and the wiring pattern 24c.

The processor 15 has a further function of determining whether the chemical liquid discharging device 2 has been previously used based on the acquired capacitance value.

The processor 15 can determine whether the disconnection portion 30 has been disconnected (rendered non-conductive). The processor 15 determines whether the disconnection portion 30 is disconnected based on the determined capacitance of the driving element 130. When the disconnection portion 30 has not been disconnected, the wiring pattern 24a and the wiring pattern 24c are electrically connected to each other via the driving element 130 and the disconnection portion 30. Therefore, the capacitance of the driving element 130 will be a predetermined or expected value for the specific type of the driving element 130. When the disconnection portion 30 has been disconnected (rendered non-conductive), the wiring pattern 24a and the wiring pattern 24c are not energized. Thus, the detected capacitance of the driving element 130 becomes essentially 0 pF or otherwise extremely small.

Therefore, when the acquired capacitance is lower than a threshold value, the processor 15 determines that the disconnection portion 30 has been disconnected. As the threshold value, for example, the capacitance at a frequency of 10 kHz is 5 pF. The threshold value can be appropriately set according to drive element 130 type.

When the acquired capacitance is equal to or greater than the threshold value, the processor 15 determines that the disconnection portion 30 is presently conductive (i.e., not in a disconnected state).

A method by which the processor 15 determines the conductive state of the disconnection portion 30 is not limited to any specific method.

The processor 15 can determine the disconnection state for each disconnection portion 30.

The processor 15 determines whether the chemical liquid discharging device 2 has been used based on the determined disconnection state of each disconnection portion 30.

For example, if at least one of the disconnection portions 30 is disconnected, the processor 15 determines that the chemical liquid discharging device 2 has been used. If none of the disconnection portions 30 are disconnected, the processor 15 determines that the chemical liquid discharging device 2 has not been used (that is, unused).

The processor 15 has a function of controlling the discharging of the liquid from the chemical liquid discharging device 2 based on the determination of whether the chemical liquid discharging device 2 has been used.

When the chemical liquid discharging device 2 has not been used, the processor 15 discharges the liquid from the chemical liquid discharging device 2.

For example, an operator supplies a predetermined amount of the liquid to the chemical liquid holding container 22 from the top surface opening portion 22b of the chemical liquid holding container 22 by a pipette or the like. The liquid is held inside the chemical liquid holding container 22. The bottom surface opening portion 22a of the bottom portion of the chemical liquid holding container 22 is connected to the chemical liquid discharge array 27. The liquid in the chemical liquid holding container 22 is then filled into each pressure chamber 210 of the chemical liquid discharge array 27 through the bottom surface opening portion 22a of the bottom surface of the chemical liquid holding container 22.

The liquid in the chemical liquid discharging device 2 may include any of, for example, a low molecular weight compound, a fluorescent reagent, a protein, an antibody, a nucleic acid, a plasma, a bacteria, a blood cell or a cell. In general, a main solvent in the liquid that is the substance in the liquid present at the largest weight or volume ratio is water, glycerin, or dimethylsulfoxide.

When the operator fills the liquid, the operator also makes a selection, via the operation unit 18a, for discharging the liquid. The operator may input the operation for discharging the liquid from a specific chemical liquid holding container 22.

When the host computer 18 receives the instruction for discharging the liquid, the host computer 18 then transmits a discharge signal instructing the discharge of the liquid to the chemical liquid dispensing apparatus 1. The discharge signal may be an instruction for the discharge of the liquid from a specific chemical liquid holding container 22.

The processor 15 receives the discharge signal through the interface 17. If the chemical liquid discharging device 2 has not been used, the processor 15 causes the chemical liquid discharging device 2 to discharge the liquid based on the discharge signal.

The processor 15 controls the X direction moving base motor 9b and the Y direction moving base motor 10b to move the chemical liquid discharging device 2 set in the mounting module 5 to a predetermined position. For example, the processor 15 moves the chemical liquid discharging device 2 to a position where the plurality of nozzles 110 is inserted into a well 300. The processor 15 may move the chemical liquid discharging device 2 to the predetermined position according to the discharge signal.

When the chemical liquid discharging device 2 is moved to the predetermined position, the processor 15 applies a voltage for discharging the liquid to the driving element 130 using the driving circuit 11.

The processor 15 transmits a signal to the driving circuit 11, and a voltage control signal is input from the driving circuit 11 to the driving element 130 as a driving power. In response to the application of the voltage control signal, the driving element 130 deforms the diaphragm 120 to change the volume of the pressure chamber 210. Therefore, the liquid is discharged as a liquid droplet from the nozzle 110 of the chemical liquid discharge array 27. As a result, the chemical liquid discharging device 2 dispenses a predetermined amount of liquid from the nozzle 110 into the well 300 of the microplate 4.

For dispensing the predetermined amount of liquid to each well 300 of the microplate 4, the processor 15 repeats an instruction for transmitting a signal to the X direction moving base control circuit 9a, the Y direction moving base control circuit 10a, and the driving circuit 11.

The number of times and the position at which the processor 15 discharges the liquid is not limited to a specific configuration.

If it is determined that the chemical liquid discharging device 2 has not been used, the processor 15 may transmit a signal indicating that the chemical liquid discharging device 2 has not been used to the host computer 18. The host computer 18 may display that the chemical liquid discharging device 2 has not been used on the display unit 18b or the like based on the corresponding signal.

FIG. 8 is a diagram of an example of the connection relationship when the processor 15 performs the discharging operation using the driving circuit 11.

As shown in FIG. 8, the driving circuit 11 is connected to the driving element 130. The driving circuit 11 is electrically connected to the wiring patterns 24a and 24c. The wiring pattern 24a is connected to GND. The wiring pattern 24c is connected to an electric power output portion of the driving circuit 11.

The driving circuit 11 applies a voltage for discharging the liquid to the wiring pattern 24c and applies the voltage to the driving element 130, based on a signal from the processor 15.

If it is determined that the chemical liquid discharging device 2 has been used, the processor 15 does not discharge the liquid from the chemical liquid discharging device 2.

For example, if the chemical liquid discharging device 2 has been used, the processor 15 does not discharge the liquid even if the processor 15 receives the discharge signal. The processor 15 transmits a signal indicating that the chemical liquid discharging device 2 has been used to the host computer 18 through the interface 17.

When the host computer 18 receives the corresponding signal, the host computer 18 displays a warning or the like indicating that the chemical liquid discharging device 2 has been previously used on the display unit 18b or the like.

The processor 15 has also a function of purposively disconnecting (changing the conductive state to non-conductive) the disconnection portion 30 by the use of the driving circuit 11 once the liquid discharge has been completed.

That is, once the discharge of the liquid has been completed, the processor 15 causes the disconnection portion 30 of the wiring pattern 24a that was used for discharging the liquid to be physically disconnected or otherwise rendered electrically non-conductive. For example, the processor 15 connects the driving circuit 11 to the wiring patterns 24a and 24b. The processor 15 applies a predetermined voltage (also referred to as a breakdown voltage) or higher to the driving circuit 11. As a result, the breakdown voltage or higher is applied to the disconnection portion 30. The disconnection portion 30 is, for example, heated by the breakdown voltage and disconnected (rendered no longer electrically conductive).

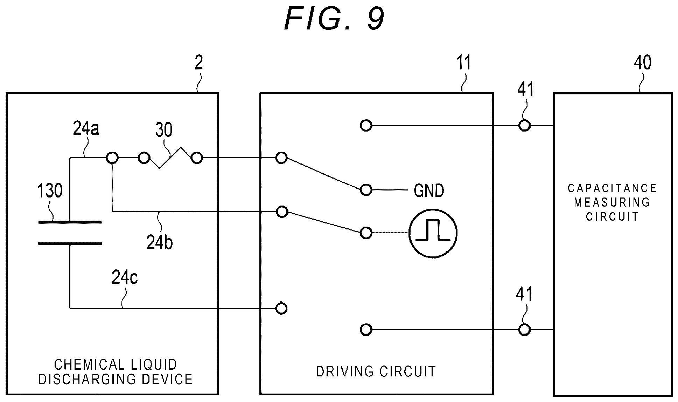

FIG. 9 is a diagram of an example of the connection relationship when the processor 15 disconnects the disconnection portion 30 using the driving circuit 11.

As shown in FIG. 9, the driving circuit 11 is connected to the disconnection portion 30. That is, the driving circuit 11 is electrically connected to the wiring patterns 24a and 24b. The wiring pattern 24a is connected to GND. The wiring pattern 24b is connected to the electric power output portion of the driving circuit 11.

Based on a signal from the processor 15, the driving circuit 11 applies the breakdown voltage or higher that causes the disconnection portion 30 to be disconnected.

In other examples, the processor 15 may cause the disconnection portion 30 to be cut or damaged with a cutter, a laser cutter, or the like, for the purposes of disconnection.

In other examples, the disconnection portion 30 may be or incorporate a switch element or the like for switching an energization state. In such a case, the processor 15 may cause the switch to switch to a non-conductive state (OFF) to cause the disconnection of disconnection portion 30.

The method by which the processor 15 disconnects the disconnection portion 30 is not necessarily limited to any specific method so long as the disconnection portion 30 is rendered disconnected and the wiring pattern 24a thereby rendered non-conductive as between the relevant device elements.

Next, an operation example of the processor 15 of the chemical liquid dispensing apparatus 1 will be described.

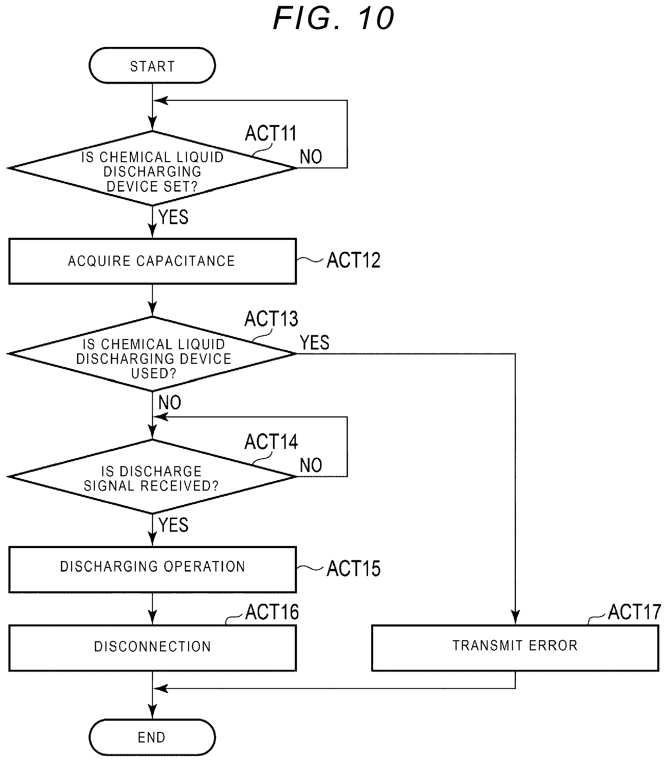

FIG. 10 is a flowchart for describing an operation example of the processor 15 of the chemical liquid dispensing apparatus 1.

First, the processor 15 determines whether the chemical liquid discharging device 2 is set in the mounting module 5 (ACT 11). When it is determined that the chemical liquid discharging device 2 is not set in the mounting module 5 (ACT 11, NO), the processor 15 returns to ACT 11.

When it is determined that the chemical liquid discharging device 2 is set in the mounting module 5 (ACT 11, YES), the processor 15 acquires the capacitance of each actuator 170 (ACT 12). Upon acquiring the capacitance of each actuator 170, the processor 15 determines whether the chemical liquid discharging device 2 has been previously used based on the capacitance of each actuator 170 (ACT 13).

When it is determined that the chemical liquid discharging device 2 has not been used (is previously unused) (ACT 13, NO), the processor 15 determines whether or not the discharge signal has been received through the interface 17 (ACT 14). When it is determined that the discharge signal has not been received through the interface 17 (ACT 14, NO), the processor 15 returns to ACT 14.

When it is determined that the discharge signal has been received through the interface 17 (ACT 14, YES), the processor 15 causes the chemical liquid discharging device 2 to discharge the liquid according to the discharge signal (ACT 15).

When the chemical liquid discharging device 2 is caused to discharge the liquid, the processor 15 disconnects the disconnection portion 30 (ACT 16).

When it is determined that the chemical liquid discharging device 2 has been used according to the use history (ACT 13, YES), the processor 15 transmits the signal (error) indicating that the chemical liquid discharging device 2 has been used to the host computer 18 through the interface 17 (ACT 17).

If the disconnection portion 30 is to be disconnected (ACT 16), or if the signal indicating that the chemical liquid discharging device 2 has been used is transmitted to the host computer 18 (ACT 17), the processor 15 ends the operation.

The processor 15 may determine whether each chemical liquid holding container 22 of the chemical liquid discharging device 2 has been used. For example, the processor 15 determines that the chemical liquid holding container 22 of the disconnected disconnection portion 30 has been used.

Once it is determined whether each chemical liquid holding container 22 has been used, the processor 15 receives the discharge signal from the host computer 18 at a predetermined timing. Here, the discharge signal instructs the discharge of the liquid from a predetermined chemical liquid holding container 22. If the chemical liquid holding container 22 that discharges the liquid has not been used, the processor 15 discharges the liquid from the chemical liquid holding container 22 according to the discharge signal. When the discharge operation has completed, the processor 15 purposively disconnects the disconnection portion 30 connected to the driving element 130 that was used for discharging the liquid from the chemical liquid holding container 22.

If the chemical liquid holding container 22 that discharges the liquid has been used, the processor 15 will not perform the discharge operation even when the processor 15 receives the discharge signal. In this case, the processor 15 may transmit a signal indicating that the corresponding chemical liquid holding container 22 has been previously used to the host computer 18.

The discharging system in the example embodiment described above measures the capacitance of an actuator of the liquid discharging device. The discharging system determines whether the disconnection portion connected to the actuator has been disconnected based on capacitance measurements. The discharging system determines whether the liquid discharging device has been previously used based on the disconnection state of the disconnection portion. The discharging system does not discharge the liquid from the liquid discharging device when the liquid discharging device has been used.

The discharging system disconnects the disconnection portion when the liquid discharging device discharges the liquid.

As a result, the discharging system can prevent the discharge of the liquid reusing the liquid discharging device that has been used once.

As described above, once the liquid discharging device has completed the discharge operation of the liquid, the discharging system purposively disconnects the disconnection portion. As a result, the discharging system can prevent the chemical liquid discharging device from discharging the liquid via the reuse of the chemical liquid discharging device that has been previously used, even when a driving voltage for discharging the liquid is applied to the used liquid discharging device.

### Second Embodiment

A liquid discharging device according to a second embodiment is different from that of the first embodiment in that the liquid discharging device according to the second embodiment discharges the liquid by a thermal jet method. The same reference numerals are used for the components that are substantially the same as those of the first embodiment, and the description of repeated components may be omitted.

The discharging system 500' according to the second embodiment includes a chemical liquid discharging device 2'.

The chemical liquid discharging device 2'includes a chemical liquid discharge array 27' in place of the chemical liquid discharge array 27.

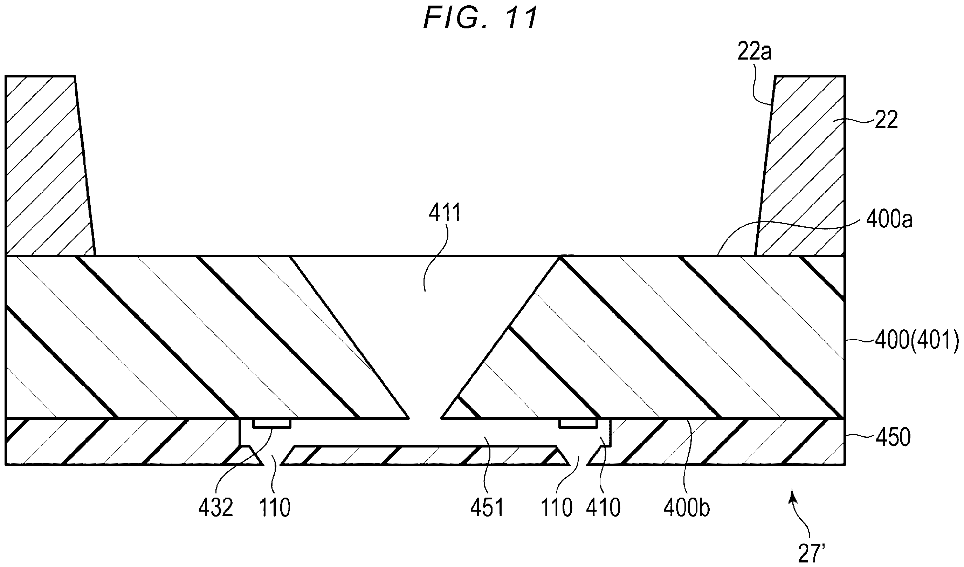

FIG. 11 is a cross-sectional view taken along a line F10-F10 of FIG. 4 according to a second embodiment.

As shown in FIG. 11, the chemical liquid discharge array 27' is formed by laminating a silicon substrate 400 and a photosensitive resin 450. An inlet port 411 communicating with the bottom surface opening portion 22a of the chemical liquid outlet port of the chemical liquid holding container 22 is formed on a surface side (also referred to as a second surface 400a) of the silicon substrate 400. A thin film heat transfer heater 432 that is an actuator and a wiring that is connected to the thin film heat transfer heater 432 and is not shown in the drawing are formed on a rear surface side (also referred to as a first surface 400b) of the silicon substrate 400. The thin film heat transfer heater 432 is electrically connected to the electrode terminal connection portion 26 and electrically connected to the wiring patterns 24a and 24c.

The photosensitive resin 450 is a substrate on which a pressure chamber 410 is formed. A flow path 451 communicating with the inlet port 411, the pressure chamber 410, and the nozzle 110 are formed on the photosensitive resin 450. The pressure chamber 410 is an area where the thin film heat transfer heater 432 is formed in the flow path 451. The thin film heat transfer heater 432 generates heat by electric power supplied from the wiring patterns 24a and 24c. The liquid in the pressure chamber 410 is heated and boiled by the thin film heat transfer heater 432, and thus the liquid is discharged from the nozzle 110.

For example, a plurality of nozzles 110 is arranged in six rows in the X direction and two rows in the Y direction. The plurality of nozzles 110 is positioned in the inside of the bottom surface opening portion 22a of the liquid outlet port of the chemical liquid holding container 22.

The capacitance measuring circuit 40 measures the capacitance of the connected configuration. In the second embodiment, the capacitance measuring circuit 40 is connected to the thin film heat transfer heater 432 as an actuator of the chemical liquid discharging device 2' through the driving circuit 11. The capacitance measuring circuit 40 measures the capacitance of the thin film heat transfer heater 432, that is, the capacitance of a circuit in which the thin film heat transfer heater 432 and the disconnection portion 30 are connected.

The capacitance measuring circuit 40 transmits the measured capacitance to the processor 15.

Next, an operation of discharging the liquid will be described. The bottom surface opening portion 22a of the lower portion of the chemical liquid holding container 22 communicates with the inlet port 411 and the flow path 451 of the chemical liquid discharge array 27'. The liquid in the chemical liquid holding container 22 is filled from the bottom surface opening portion 22a of the chemical liquid holding container 22 to each pressure chamber 410 in the flow path 451 formed on the photosensitive resin 450 through the inlet port 411 formed on the silicon substrate 400.

In this state, the voltage control signal input to the control signal input terminal 25 of the wiring patterns 24a and 24c from the driving circuit 11 is applied to a plurality of thin film heat transfer heater 432 of the chemical liquid discharge array 27'. Therefore, the plurality of thin film heat transfer heaters 432 generates heat, and the chemical liquid in the pressure chamber 410 is heated and boiled. As a result, the liquid is discharged from the nozzle 110 as a liquid droplet. A predetermined amount of liquid is dropped from the nozzle 110 to the well 300 of the microplate 4.

In the thermal jet method, the liquid comes into contact with the thin film heat transfer heater 432 having a temperature equal to or higher than 300°C. Therefore, in the thermal jet method, it is preferable that the liquid have a high thermal resistance (that is, not be a material that is substantially deteriorated by contact with a heater having a temperature equal to or higher than 300°C).

Next, the function realized by the processor 15 of the chemical liquid dispensing apparatus 1 will be described. The following function is realized by the processor 15 executing the program stored in the memory 16 or the like.

First, the processor 15 has a function of acquiring capacitance of the actuator (thin film heat transfer heater 432) of the chemical liquid discharging device 2'.

The processor 15 determines whether the chemical liquid discharging device 2' is set in the mounting module 5. When it is determined that the chemical liquid discharging device 2' is set in the mounting module 5, the processor 15 causes the capacitance measuring circuit 40 to measure the capacitance of the actuator. That is, the processor 15 measures the capacitance of the thin film heat transfer heater 432 as the capacitance of the actuator. The capacitance of the thin film heat transfer heater 432 is a capacitance generated between the wiring pattern 24a and the wiring pattern 24c.

For example, the processor 15 transmits a signal to the driving circuit 11 to connect the thin film heat transfer heater 432 and the capacitance measuring circuit 40. The processor 15 acquires the capacitance measured by the capacitance measuring circuit 40.

The processor 15 acquires the capacitance of each actuator (each thin film heat transfer heater 432) corresponding to each chemical liquid holding container 22.

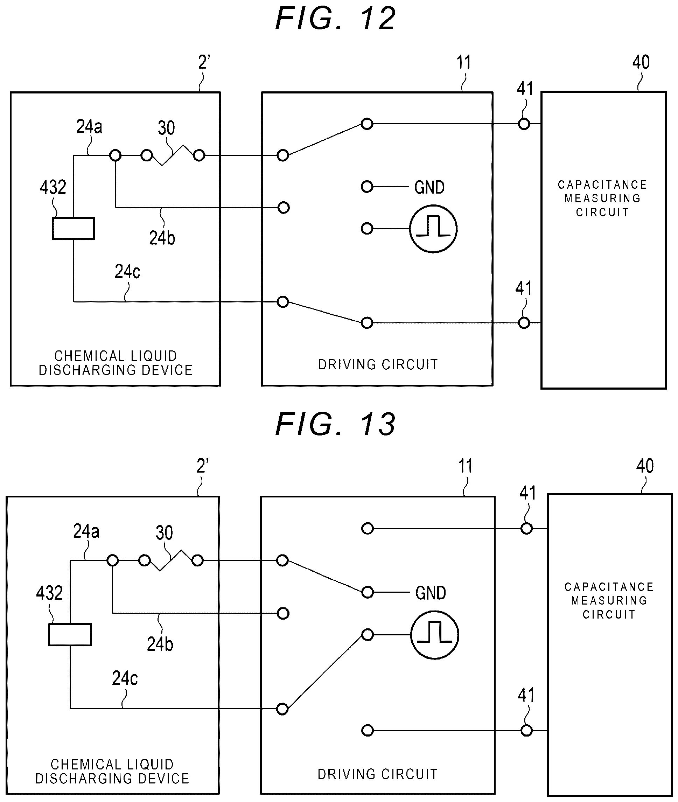

FIG. 12 is a diagram of an example of the connection relationship when the capacitance measuring circuit 40 measures the capacitance of the thin film heat transfer heater 432.

As shown in FIG. 12, the capacitance measuring circuit 40 is connected to the thin film heat transfer heater 432 through the interface 41 and the driving circuit 11. The capacitance measuring circuit 40 is electrically connected to the wiring patterns 24a and 24c. The capacitance measuring circuit 40 measures the capacitance of the thin film heat transfer heater 432 generated between the wiring pattern 24a and the wiring pattern 24c.

The processor 15 has a function of determining whether the chemical liquid discharging device 2' has been previously used based on the acquired capacitance.

The processor 15 determines whether the disconnection portion 30 is disconnected. The processor 15 determines whether the disconnection portion 30 is disconnected based on the capacitance of the thin film heat transfer heater 432.

The method of determining the disconnection of the disconnection portion 30 by the processor 15 is the same as in the first embodiment, and the explanation thereof will not be repeated.

The processor 15 determines the disconnection of each disconnection portion 30.

The processor 15 determines whether the chemical liquid discharging device 2' has been previously used based on the disconnection state of each disconnection portion 30.

For example, if at least one disconnection portion 30 is disconnected, the processor 15 determines that the chemical liquid discharging device 2' has been used. If none of the disconnection portion 30 is disconnected, the processor 15 determines that the chemical liquid discharging device 2' has not been used (unused).

The processor 15 has a function of discharging the liquid from the chemical liquid discharging device 2' based on the determination result of whether the chemical liquid discharging device 2' has been used.

When the chemical liquid discharging device 2' has not been previously used, the processor 15 discharges the liquid from the chemical liquid discharging device 2'. The operation in which the processor 15 causes the chemical liquid discharging device 2' to discharge the liquid is the same as in the first embodiment, and the explanation thereof will not be repeated.

FIG. 13 is a diagram of an example of the connection relationship when the processor 15 performs the discharging operation using the driving circuit 11.

As shown in FIG. 13, the driving circuit 11 is connected to the thin film heat transfer heater 432. The driving circuit 11 is electrically connected to the wiring patterns 24a and 24c. The wiring pattern 24a is connected to GND. The wiring pattern 24c is connected to the electric power output portion of the driving circuit 11.

Based on a signal from the processor 15, the driving circuit 11 applies a voltage for discharging the liquid to the wiring pattern 24c and applies the voltage to the thin film heat transfer heater 432.

When the chemical liquid discharging device 2' has been previously used, the processor 15 does not discharge the liquid from the chemical liquid discharging device 2'.

For example, when the chemical liquid discharging device 2' has been previously used, the processor 15 does not discharge the chemical liquid even when receiving the discharge signal. The processor 15 transmits a signal indicating that the chemical liquid discharging device 2' has been used to the host computer 18 via the interface 17.

When the host computer 18 receives the corresponding signal, the host computer 18 displays a warning or the like indicating that the chemical liquid discharging device 2' has been previously used on the display unit 18b or the like.

The processor 15 has a function of purposively disconnecting the disconnection portion 30 using the driving circuit 11 once the liquid has been completely discharged.

The method of disconnecting the disconnection portion 30 by the processor 15 is the same as in the first embodiment, and the explanation thereof will not be repeated.

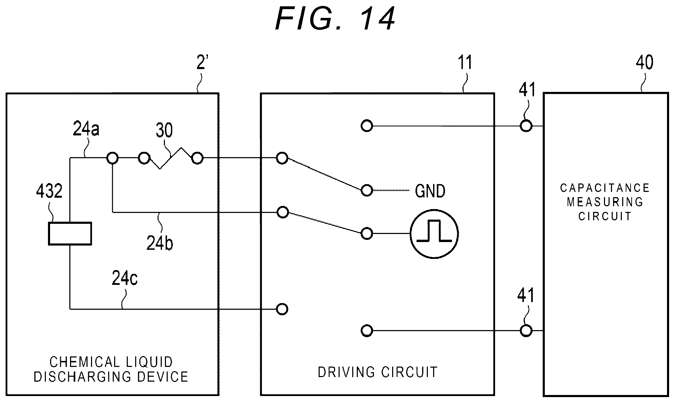

FIG. 14 is a diagram of an example of a connection relationship when the processor 15 disconnects the disconnection portion 30 using the driving circuit 11.

As shown in FIG. 14, the driving circuit 11 is connected to the thin disconnection portion 30. That is, the driving circuit 11 is electrically connected to the wiring patterns 24a and 24b. The wiring pattern 24a is connected to GND. The wiring pattern 24b is connected to the electric power output portion of the driving circuit 11.

The driving circuit 11 applies the breakdown voltage or higher to the disconnection portion 30 based on the signal from the processor 15.

An operation example of the processor 15 of the chemical liquid dispensing apparatus 1 is the same as in the first embodiment, and the explanation thereof will not be repeated.

The liquid discharging device configured as described above has a simpler structure as compared to that required for a piezo jet method, and thus it is possible to miniaturize the actuator. Therefore, a liquid discharging device can have nozzles at a higher density than one based on the piezo jet method.

The discharging system in example embodiments described above measures the capacitance of the actuator of the liquid discharging device. The discharging system determines whether a disconnection portion connected to the actuator has been disconnected based on the measured capacitance value. The discharging system determines whether the liquid discharging device has been used based on the state of the disconnection portion. The discharging system does not discharge the liquid from the liquid discharging device when the liquid discharging device has previously been used.

The discharging system acts to disconnect the disconnection portion when (or soon thereafter) the liquid discharging device discharges the liquid.

As a result, the discharging system can prevent the discharge of a liquid via the reuse of a liquid discharging device that has been previously used.

As described above, when the liquid discharging device discharges the liquid, the discharging system physically disconnects the disconnection portion. As a result, the discharging system can prevent the liquid discharging device from discharging the liquid, even if a driving voltage for discharging the liquid is applied to the already used chemical liquid discharging device.

In the example embodiments described above, the driving element 130 has a circular shape. However, the shape of the driving element 130 (or the like) is not limited. For example, the shape of the driving element 130 may be a diamond shape, an elliptical shape, or the like. The shape of the pressure chamber 210 is not limited to a circular shape, and the pressure chamber 210 may be a diamond shape, an elliptical shape, a rectangular shape, or the like.

In the example embodiments described above, the nozzle 110 is disposed at the center of the driving element 130. However, as long as the liquid of the pressure chamber 210 can be discharged, the position of the nozzle 110 is not particularly limited. For example, the nozzle 110 may be formed on an outer periphery of the driving element 130 rather than within an interior region of the driving element 130.

While certain embodiments have been described, these embodiments have been presented by way of example only, and are not intended to limit the scope of the inventions. Indeed, the novel embodiments described herein may be embodied in a variety of other forms. Furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A liquid discharging device to be used with a liquid dispensing apparatus, comprising:
an actuator configured to cause a discharge of a liquid according to an electrical signal supplied from the liquid dispensing apparatus; and
a first wiring pattern connected to the actuator and configured to electrically connect the actuator to a driving circuit of the liquid dispensing apparatus when the liquid discharging device is mounted on the liquid dispensing apparatus, the first wiring pattern including a disconnection portion configured to introduce an electrical disconnection in the first wiring pattern between the actuator and the driving circuit according to a predetermined supply of electrical power from the driving circuit.

2. The liquid discharging device according to claim 1, wherein the disconnection portion is a resistor or a fuse.

3. The liquid discharging device according to claim 1 or 2, further comprising:
a second wiring pattern having a first end connecting to a node between the disconnection portion and the actuator and a second end connecting to the driving circuit when the liquid discharging device is mounted on the liquid dispensing apparatus; and
a third wiring pattern having a first end connecting to the driving circuit when the liquid discharging device is mounted on the liquid dispensing apparatus and a second end connecting to the actuator, the actuator being between the first and third wiring patterns.

4. The liquid discharging device according to claim 3, wherein the first wiring pattern and the third wiring pattern are configured to supply a discharge voltage to the actuator from the driving circuit, the discharge voltage causing a discharge of liquid from the liquid dispensing apparatus.

5. The liquid discharging device according to claim 3, wherein the first wiring pattern and the second wiring pattern are configured to supply a disconnection voltage to the disconnection portion from the driving circuit, the disconnection voltage causing the disconnection portion to introduce the electrical disconnection in the first wiring pattern.

6. The liquid discharging device according to any one of claims 1 to 5, wherein the actuator is formed of a piezoelectric film or a heater.

7. A liquid dispensing apparatus, comprising:
a mounting unit on which a liquid discharging device is mounted;
a driving circuit to supply a driving voltage to the liquid discharging device mounted on the mounting unit; and
a controller configured to cause the driving circuit to supply a discharge voltage and a disconnection voltage after a discharge of liquid, wherein
the liquid discharging device includes:
an actuator configured to cause a discharge of a liquid according to the discharge voltage supplied from the driving circuit; and
a first wiring pattern connected to the actuator and configured to electrically connect the actuator to the driving circuit, the first wiring pattern including a disconnection portion configured to introduce an electrical disconnection in the first wiring pattern between the actuator and the driving circuit according to the disconnection voltage supplied from the driving circuit.

8. The liquid dispensing apparatus according to claim 7, further comprising
a capacitance measuring circuit configured to measure a capacitance value of the actuator, wherein
the controller is configured to:
acquire the capacitance value, and
cause the driving circuit to supply the discharge voltage to the actuator only if the acquired capacitance value is above a predetermined threshold.

9. The liquid dispensing apparatus according to claim 7 or 8, wherein the liquid discharging device further comprises:
a second wiring pattern having a first end connecting to a node between the disconnection portion and the actuator and a second end connecting to the driving circuit when the liquid discharging device is mounted on the mounting unit; and
a third wiring pattern having a first end connecting to the driving circuit when the liquid discharging device is mounted on the mounting unit and a second end connecting to the actuator, the actuator being between the first and third wiring patterns.

10. The liquid dispensing apparatus according to claim 9, wherein the first wiring pattern and the third wiring pattern are configured to supply the discharge voltage to the actuator from the driving circuit.

11. The liquid dispensing apparatus according to claim 9, wherein the first wiring pattern and the second wiring pattern are configured to supply the disconnection voltage to the disconnection portion from the driving circuit.

12. The liquid dispensing apparatus according to any one of claims 9 to 11, wherein the capacitance measuring circuit connects to the first wiring pattern and the third wiring pattern to measure the capacitance value of the actuator.

13. A method of controlling a discharge of a liquid from a liquid dispensing apparatus, comprising:
determining a liquid discharging device is mounted on a liquid dispensing apparatus;
acquiring a capacitance value of an actuator of the liquid discharging device mounted on the liquid dispensing apparatus;
receiving a discharge signal through an interface;
supplying a first control signal to a driving circuit of the liquid dispensing apparatus to drive the actuator of the liquid dispensing device to discharge a liquid if the acquired capacitance value is above a predetermined threshold; and
supplying a second control signal to introduce an electrical disconnection in a first wiring connecting the driving circuit to the actuator after supply of the first control signal, wherein
the first wiring includes a disconnection portion configured to introduce an electrical disconnection between the actuator and the driving circuit when the second control signal is supplied.

14. The method according to claim 13, further comprising:
supplying a disconnection voltage to the disconnection portion of the first wiring from the driving circuit to introduce the electrical disconnection in the first wiring in response to the second control signal.

15. The method according to claim 13 or 14, further comprising:
transmitting a signal indicating the liquid dispensing apparatus has been used through the interface if the acquired capacitance value is below the predetermined threshold.
